# EUROPEAN PATENT APPLICATION

(11) **EP 4 552 478 A1**
(43) Date of publication of application: **14.05.2025**
(21) Application number: 24209326.8
(22) Date of filing: 29.10.2024
(51) Int. Cl.: A01F 15/08, A01B 79/00

(54) **GEOTAGGED WINDROW INFORMATION**

(30) Priority: 07.11.2023 US 202318503565
(71) Applicant: Deere & Company, Moline, IL 61265 (US)
(72) Inventor: SOMAROWTHU, MAHESH, 68163 Mannheim (DE); SHIRISHKUMAR, J. CHOBHE, 68163 Mannheim (DE)
(74) Representative: Stein, Stefan

(57) **Abstract**

Geotagged information about a crop harvest is captured while harvesting. The geotagged information may be communicated to a management system or other work machines. The geotagged information may be utilized by a tractor or other work vehicle during collection of the harvested crop. For instance, the vehicle may automatically control a speed or output information on a display to aid an operator to control the speed.

## Description

### BACKGROUND

For some agricultural products, a crop is harvested and allowed to dry before bundling or pickup. In some situations, the crop is formed into windrows after harvesting. For example, hay farmers may harvest the crop with self-propelled windrowers or mower-conditioners. These agricultural machines cut the hay and form windrows of hay. After a dry-down period, for example, the windrows may be collected by a self-propelled forage harvest or baled by a round or square baler.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

In one implementation, a system for an agricultural machine is provided. The system includes a controller that operably receives input data indicative of location-dependent quantities of crop and a position of the agricultural machine. The controller includes at least one processor and a memory that stores instructions that, when executed by the at least one processor, configure the at least one processor to: acquire an estimated quantity of crop based on the position of the agricultural machine and the location-dependent quantities of crop; and generate adjustment data indicative of an adjustment to a speed of the agricultural machine based on the estimated quantity of crop. The system further includes a drive system that adjusts the speed of the agricultural machine based on the adjustment data.

In another implementation, a method for an agricultural machine is provided. The method includes determining a position of the agricultural machine. The method also includes acquiring an estimated quantity of crop at a location corresponding to the position of the agricultural machine. In addition, the method includes generating adjustment data indicative of an adjustment to a speed of the agricultural machine. Further, the method includes generating a control signal for a drive system of the agricultural machine based in part on the adjustment data.

In yet another implementation, a system is provided. The system includes a set of sensors configured to sense a set of attributes related to crop processing by a first agricultural machine at a plurality of intervals throughout an area. The set of sensors includes at least one of a header load sensor configured to sense a load on a header of the first agricultural machine or a swath flap load sensor configured to sense a load on a swath flap of the first agricultural machine. The system also includes a first position sensor configured to determine a position of the first agricultural machine for each interval at which the set of sensors sense the set of attributes. The system further includes a second position sensor configured to determine a position of a second agricultural machine. In addition, the system includes any of one or more processors. Any of the one or more processors are configured to receive sensor data from the set of sensors at the plurality of intervals. The sensor data is indicative of the set of attributes, and the set of attributes include at least a header load of the first agricultural machine at each interval. The one or more processors are further configured to receive first position data from the first position sensor. The first position data is indicative of a location of the first agricultural machine at each interval. In addition, the one or more processors are configured to generate a set of values indicative of an estimated quantity of crop processed by the first agricultural machine for each interval throughout the area based on the sensor data and the first position data. Each value is tagged with a corresponding location in area. The one or more processors are further configured to receive second position data from the second position sensor. The second position data is indicative of a location of the second agricultural machine. The one or more processors are further configured to acquire an estimated quantity of crop corresponding to the location of the second agricultural machine. In addition, the one or more processors are configured to generate adjustment data indicative of an adjustment to a speed of the second agricultural machine based on the estimated quantity of crop.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

Various non-limiting embodiments are further described in the detailed description given below with reference the accompanying drawings, which are incorporated in and constitute a part of the specification.
Fig. 1 illustrates a block diagram of an exemplary, non-limiting implementation of a system for generating and utilizing geotagged windrow information in an agricultural environment according to various aspects.
Fig. 2 illustrates an exemplary, non-limiting implementation of an agricultural machine according to various aspects.
Fig. 3 illustrates an exemplary, non-limiting implementation of an agricultural machine according to various aspects.
Fig. 4 illustrates an exemplary, non-limiting implementation of an agricultural machine according to various aspects.
Fig. 5 illustrates a block diagram of an exemplary, non-limiting implementation of a control system for one or more agricultural machines according to various aspects.
Fig. 6 is flow chart of an exemplary, non-limiting implementation for controlling a agricultural machine in accordance with various aspects.
Fig. 7 is a flow chart of an exemplary, non-limiting implementation for generating geotagged windrow information according to various aspects.
Fig. 8 is a schematic diagram of an exemplary, non-limiting implementation of a computing device according to various aspects.

### DETAILED DESCRIPTION

As described above, some crops may be harvested by first cutting the crop and forming windrows with an agricultural machine such as a self-propelled windrowers or a mower-conditioner. The windrows may be collected by an agricultural machine such as a forage harvester or a baler that collects the windrows into round or square bales. The material in the windrow should flow smoothly into the baler or forage harvester to minimize a loss of crop.

In an example, when the windrow is thin (e.g. relatively lower quantity of hay per interval), the windrow may break if a speed of an agricultural vehicle (e.g. a baler, a tractor pulling a baler, a forage harvester) is low while the system collecting the windrow picks up the crop. The breaking of a windrow leads to nutrient loss (e.g. loss of leaves) and lowers an effectiveness of overall collection. In another example, when the windrow is thick (e.g. relatively higher quantity of hay per interval), the material in the windrow may get bulldozed when the vehicle speed is higher than needed. Like with window breakage, bulldozing leads to crop loss. Accordingly, the speed of the vehicle may need frequent changes (e.g. increased when windrow is thin, decreased when windrow is thick) to minimizing bulldozing or breaking and avoid loss of crop.

A system and techniques are described herein to control the speed of an agricultural vehicle. Control of vehicle speed minimizes breaking or bulldozing as described above, which also minimizes losses in crop production. The losses may have a higher impact on leaves, which provide the most nutrients. The speed of the vehicle may be automatically controlled or indicators may be output to an operator to facilitate adjustments to the speed. In an aspect, automated control or indicators may be based on information collected during harvesting of the crop.

According to various aspects, geotagged information about a crop harvest is captured while harvesting. The geotagged information may be communicated to remote system (e.g., datacenter, management system, other agricultural machines, etc.). The geotagged information may be utilized by a tractor or other agricultural vehicle during baling of the harvested crop. For instance, the vehicle may automatically control a speed or output information on a display to aid an operator to control the speed. The speed control minimizes breaking or bulldozing and facilitates smooth flow of crop into a bale chamber or feeding system of a forage harvester. In an aspect, the geotagged information may include a relative or absolute quantity of crop per interval of windrow length together with a geo-location.

In one exemplary implementation, a header motor or load sensor on an agricultural machine (e.g. a windrower or mower-conditioners) is utilized to estimate the relative or absolute quantity of hay per interval of windrow length. The load sensor may include a load sensor associated with the header and/or a load sensor associated with a swath flap. Such load sensors may be utilized individually or separately to estimate the quantity of crop. For instance, if both sensors are active, measurements may be combined, using an average, other statistical measures, or some other heuristic to improve accuracy of the estimation. The load sensors also provide redundancy in case of failure of one sensor. If both sensors fail, previous averaged or combined information may be considered.

Using positioning information, the quantity information is geotagged. The geotagged information can be sent to a remote system for later retrieval by another agricultural machine and/or sent to the agricultural machine directly. The other agricultural machine utilizes the information together with its own position information to adjust the speed of the machine based on the quantity of material in the windrow.

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

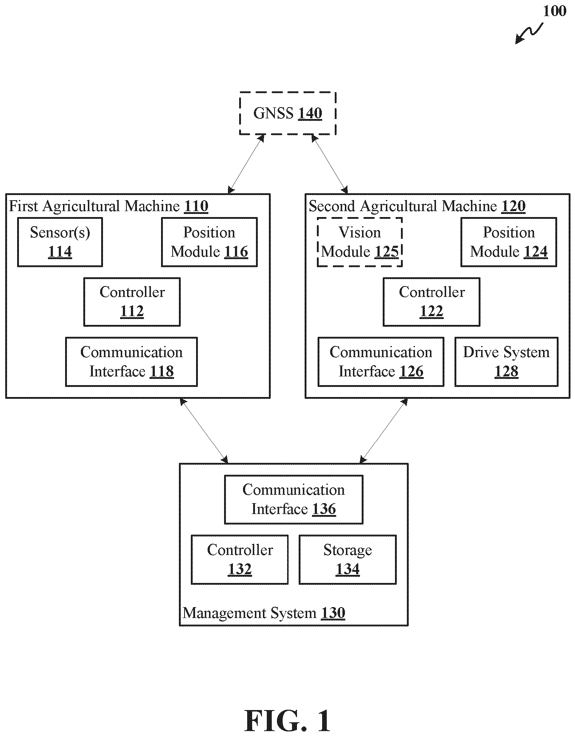

Referring initially to Fig. 1, an exemplary, non-limiting implementation of a system 100 for generating and utilizing geotagged windrow information in an agricultural environment is illustrated. As shown in Fig. 1, system 100 may include a first agricultural machine 110 and a second agricultural machine 120. The first agricultural machine 110, in some implementations, may be a self-propelled windrower or a mower-conditioner (pulled by a tractor). The second agricultural machine 120 may be a baler or a forage harvester, in some exemplary implementations. It is to be appreciated that the aspects described herein are not limited to the exemplary machines above and the techniques herein can be applied to other machines where communication of geotagged information between two machines is beneficial.

In one exemplary scenario, the first agricultural machine 110 performs an operation in an area (e.g. a crop field). The operation may be a harvesting operation, for instance. While performing the operation, the first agricultural machine 110 captures information about the material processed. The information may be communicated to the second agricultural machine 120 and/or a management system 130. The second agricultural machine 120, according to the exemplary scenario, performs a second operation in the field. The second agricultural machine 120 acquires the information captured by the first agricultural machine 110 and utilizes the information to control the second operation.

In a more specific example, the operation performed by the first agricultural machine 110 is a harvesting operation. While harvesting, the first agricultural machine 110 estimates an amount of crop per interval of harvesting. The interval may be per foot, per meter, or per some configurable multiple of a base unit (i.e. foot, meter, etc.). The first agricultural machine 110 may cut the crop and create a windrow. Accordingly, the amount of crop may be indicative of an quantity of crop per interval of windrow length. The first agricultural machine 110 geotags the estimate. For instance, the first agricultural machine 110 associates an estimated quantity for a particular interval with a geo-location of that interval. In an aspect, the first agricultural machine 110 generates a set of data that includes estimated quantities per interval over the crop field combined with respective locations of each interval.

The second agricultural machine 120 utilizes the set of data to control the second operation, which may be a baling operation or a harvesting operation by a forage harvester, for example. The second agricultural machine 120 acquires its position and utilizes this position to acquire an associated quantity of crop at that position based on the set of data captured by the first agricultural machine 110. As described above, the second agricultural machine 120 may automatically control its speed based on the quantity of crop. For instance, the second agricultural machine 120 may increase speed when the quantity is relatively lower or may decrease speed when the quantity is relatively higher. Moreover, the machine 120 may maintain a current speed when the current speed is appropriate for a given quantity of crop.

As shown in Fig. 1, the first agricultural machine 110 includes a controller 112, sensors 114, a position module 116, and a communication interface 118. The controller 112 may include a processor and a memory storing computer-executable instructions that, when executed by the processor, configure the processor to acquire, process, and communicate information as described herein. Sensors 114 may include at least a header motor sensor and/or load sensor configured to output sensor data indicative of status of a header motor or a load on the header. A load on the header or pressure on the header is indicative of an amount of crop being cut by the header. For example, resistance on the cutter is a proxy for the amount of crop. Sensors 114 may also include a swath flap load sensor that detects a load on the swath flap of the first agricultural machine 110. Such load sensors (e.g. the header load sensor and the swatch flap load sensor) may be utilized individually or separately. For instance, if both sensors are active, measurements may be combined, using an average, other statistical measures, or some other heuristic to improve accuracy of the estimation. The load sensors also provide redundancy in case of failure of one sensor. If both sensors fail, previous averaged or combined information may be considered.

Sensor signals on the header load, swatch flap load, or motor resistance may be provided to controller 112 for processing. Controller 112 may estimate a quantity or amount of crop per interval. In one example, controller 112 collects continuous sensor signals for a period of time corresponding to a traversal time for the interval and aggregates those signals over the interval. In another example, controller 112 polls sensor 114 with a period corresponding to the interval (e.g. once per interval, twice per interval,...N-times per interval where N is any integer greater than or equal to one). The estimated quantity may be an absolute quantity or a relative quantity. For example, the estimated quantity determined for an interval may be an amount change or difference from a previous interval or a predetermined reference amount. For example, the estimated quantity for an interval may be indicative of an increase or decrease in the amount from a previous interval. Alternatively, the predetermined reference amount may correspond to an amount of crop for a reference speed of a baling operation or forage harvesting operation. The estimated quantity may be a relative difference, up or down, from the predetermined reference amount.

The first agricultural machine 110 may include other sensors or imaging units 114 such as a near infrared (NIR) sensor, a terahertz sensor, a constituents sensor, a moisture sensor, an ultraviolet sensor, an optical camera, or combinations thereof. Sensor data from these sensors may be collected together with data from the load or motor sensor, and similarly aggregated. For example, information indicative of a thickness of crop stems or a moisture content of the crop may be utilized to reduce error in the estimation of the quantity of crop.

While collecting data from sensor, the first agricultural machine 110 acquires positioning signals from a global navigation satellite system (GNSS) 140 or other positioning system with the position module 116. A position of the first agricultural machine 110 may be acquired for each interval. In one aspect, the interval may be configured based on a resolution of positioning.

Controller 112 associates, for each interval, the estimated quantity of crop determined from data acquired by sensors 114 with a position determined with position module 116. Thus, once the association is made for each interval, controller 112 generates the set of data that includes estimated quantities per interval over the crop field combined with respective locations of each interval. The set of data may be a map that may be indicative of the estimated quantity of crop over a harvested area in combination with acquired location information.

First agricultural machine 110 utilizes a communication interface 118 to communicate the set of data and/or map to the management system 130 and/or second agricultural machine 120. Communication interface 118 may be, but is not limited to, a WiFi interface, an Ethernet interface, a Bluetooth interface, a fiber optic interface, a cellular radio interface, a satellite interface, etc. In another aspect, first agricultural machine 110 may further communicate sensor data from sensor 114 for processing remote from first agricultural machine 110.

Second agricultural machine 120, as shown in Fig. 1, includes a controller 122, a position module 124, a communication interface 126, and a drive system 128. The controller 122 may include a processor and a memory storing computer-executable instructions that, when executed by the processor, configure the processor to control the second agricultural machine 120 as described herein.

While performing a second operation in an area, which is the same area traversed by first agricultural machine 110, the second agricultural machine 120 acquires positioning signals from GNSS 140 or other positioning system with the position module 124. A position of the second agricultural machine 120 may be determined based on the positioning signals.

The second agricultural machine 120 communicates with the first agricultural machine 110 and/or the management system 130 via communication interface 126. Communication interface 126 may be, but is not limited to, a WiFi interface, an Ethernet interface, a Bluetooth interface, a fiber optic interface, a cellular radio interface, a satellite interface, etc. Via communication interface 126, the second agricultural machine 120 may acquire the set of data and/or map generated by the first agricultural machine 110. The set of data or map may be acquired from the first agricultural machine 110 or the management system 130.

According to an example, with a position determined via position module 124, the second agricultural machine 120 (or controller 122) determines an estimated quantity of crop at that position. As noted above, the set of data includes geotagged amounts of crop. Accordingly, the position is utilized to extract the quantity for a particular location. In another aspect, the second agricultural machine 120 may communicate its position to the management system 130 or first agricultural machine 110 and receives the estimated quantity of crop at that position in response.

Based on the estimated quantity of crop at a position, controller 122 controls drive system 128 of second agricultural machine 120 to control a speed of the second agricultural machine 120. For example, controller 122 may generate controls signals for one or more actuators of drive system 128 to increase, decrease, or maintain a current speed of the second agricultural machine 120. The actuators, for instance, may control a throttle, a transmission, brakes, or other components of drive system 128 that influence a speed of machine 120.

In one example, controller 122 may generate adjustment data indicative of an adjustment to the speed of machine 120 based on the estimated quantity of crop. The adjustment data may be based on a threshold or predetermined reference quantity. For example, if the estimated quantity at a position is below the threshold or reference, the adjustment data indicates an increase in vehicle speed. When the estimated quantity at a position is above the threshold or reference, the adjustment data indicates a decrease in vehicle speed. Further, controller 122 receives a current speed as input. No adjustment may be needed when the current speed matches a desired speed for the estimated quantity at a position. In another example, controller 122 may have a plot or curve that indicates a speed for a given quantity of crop. Using this structure, controller 122 can generate adjustment data for the speed continuously to match.

In a further implementation, adjustment data may be utilized to generate status data or an indicator that is output to an operator interface of the second agricultural machine 120. The indicator or status data may be an operational state of the system such as, but not limited to, an indication that the system is processing data or is offline. The indicator or status data may also be indicative of the adjustment data and inform the operator that vehicle speed is optimal, should be increased, should be decreased, etc. Accordingly, in addition to full automation of vehicle speed, system 100 allows manual speed control or supervisory speed control. In supervisory speed control, control signals are automatically sent to drive system 128 under the supervisor of the operator.

In another aspect, second agricultural machine 120 may include a vision module 125 that includes, for example, a monoscopic or stereoscopic camera. The vision module 125 captures images of an area ahead of the second agricultural machine 120 in a direction of travel. Controller 122 analyses the images to estimate the amount of crop ahead and generates adjustment data accordingly.

In yet another aspect, the second agricultural machine 120 may acquire additional information such as the constituent information, stem thicknesses, and/or moisture content captured by the first agricultural machine 110. Controller 122 may utilize the additional information to determine potential error in the estimate quantity of crop and take the error into account when generating adjustment data.

Management system 130 includes a controller 132, storage 134, and a communication interface 136. Controller 132 may include a processor and memory storing computer-executable instructions. Storage 134 may be persistent storage and include, for example, a database that stores information acquired by first agricultural machine 110 and other agricultural machines. For example, storage 134 may store geotagged information indicative of quantities of crop at particular locations. Management 130 may receive and send stored information via communication interface 136. Communication interface 136 may be, but is not limited to, a WiFi interface, an Ethernet interface, a Bluetooth interface, a fiber optic interface, a cellular radio interface, a satellite interface, etc.

According to an aspect, management system 130 may receive sensor data from sensors 114 and positioning information of the first agricultural machine 110. Controller 132 of management system 132 may analyze the sensor data and determine the estimated quantity of crop per interval. Further, the management system 130 can associate the estimated quantities with position information. Thus, management system 130 may perform data processing on behalf of first agricultural machine 110 to generate geotagged information utilized by second agricultural machine 120 as described above.

Similarly, in another aspect, management 130 may receive position information from second agricultural machine 120 and utilize the received information to generate adjustment data (to a speed of the vehicle) for the second agricultural machine 120.

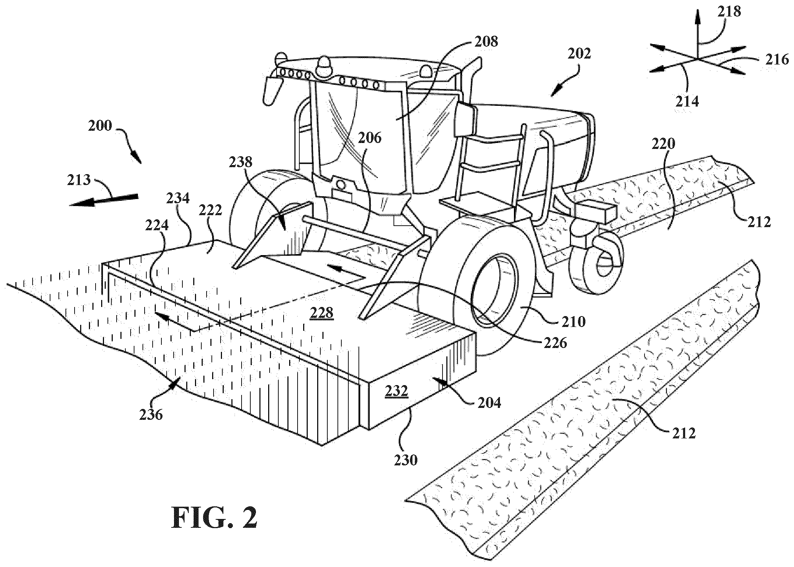

Turning now to Fig. 2, illustrated is a diagram of an exemplary, non-limiting work vehicle and associated equipment that may utilize the techniques and system described herein. As illustrated in Fig. 2, a harvesting work vehicle, such as a windrower 200, is illustrated as one example implementation of first agricultural machine 110. In some implementations, the windrower 200 may be a self-propelled machine. However, the systems and methods described herein may be equally applicable to towed machines, or other configurations, as will be appreciated by those having skill in the art. Furthermore, although harvesting work vehicles that mow, condition and windrow crop materials are sometimes interchangeably referred to as mower-conditioners or windrowers, for the sake of simplicity, such machines will be referred to herein as "windrowers". Further, one or more portions of the methods and systems described herein may apply to other harvesting work vehicles or to construction and forest harvester vehicles.

Machines that collect and condition crop material, and form a windrow from the same material are discussed according to implementations of the present disclosure; however, it will be appreciated that the present teachings may apply to machines that form windrows without necessarily conditioning the crop material. The present teachings may also apply to machines that condition (crimp, crush, etc.) crop material without necessarily forming a windrow. Furthermore, the systems and methods of the present disclosure may apply to harvesting of various types of crop materials, such as grasses, alfalfa, silage, or otherwise. Accordingly, it will be appreciated that a wide variety of machines, systems, and methods may fall within the scope of the present disclosure.

In some implementations, the windrower 200 broadly comprises a self-propelled tractor 202 and a header 204 (i.e., header attachment). The header 204 may be attached to the front 238 of the tractor 202. The tractor 202 may include a chassis 206 and an operator compartment 208 supported atop the chassis 206. The operator compartment 208 may provide an enclosure for an operator and for mounting various user control devices (e.g., a steering wheel, accelerator and brake pedals, etc.), communication equipment and other instruments used in the operation of the windrower 200, including a user interface providing visual (or other) user control devices and feedback. The tractor 202 may also include one or more wheels 210 or other traction elements (e.g., tracks) for propelling the tractor 202 and the header 204 across a field or other terrain. The windrower 200 may form a windrow 212 as it moves along a travel direction indicated by the arrow 213.

The windrower 200 may define a coordinate system, such as a Cartesian coordinate system having a longitudinal axis 214, a lateral axis 216, and a vertical axis 218. The longitudinal axis 214 may be substantially parallel to the travel direction 213. The lateral axis 216 may be horizontal and normal to the longitudinal axis 214 to extend between opposing sides of the windrower 200. The vertical axis 218 may extend vertically and normal to the longitudinal axis 214, the lateral axis 216, and the ground 220.

The header 204 may generally include a frame 222, which is mounted to the chassis 206. The frame 222 may be mounted for movement relative to the chassis 206. For example, the frame 222 may move up and down, at least partly, along the vertical axis 218 relative to the chassis 206 and relative to crop material 236. In some implementations, the frame 222 may tilt and rotate about an axis that is parallel to the lateral axis 216. Also, the frame 222 may comprise one or more support elements for supporting implements (e.g., arrangement of implements, etc.).

The frame 222 may generally include a front end 224 and a rear end 226. The rear end 226 may be spaced apart along the longitudinal axis 214 and may be attached to the chassis 206 of the tractor 202. The frame 222 may also include a top structure 228 and a lower area 230, which are spaced apart along the vertical axis 218. Furthermore, the frame 222 may include a first lateral side 232 and a second lateral side 234, which are spaced apart along the lateral axis 216.

In the exemplary implementation of Fig. 2, the front end 224 is open to receive crop material 236 as the tractor 202 moves across the field. In some implementations, the windrower 200 cuts the crop material 236, then conditions the crop material, and then shapes, places and/or arranges the crop material 236 into the windrow 212 as the tractor 202 moves.

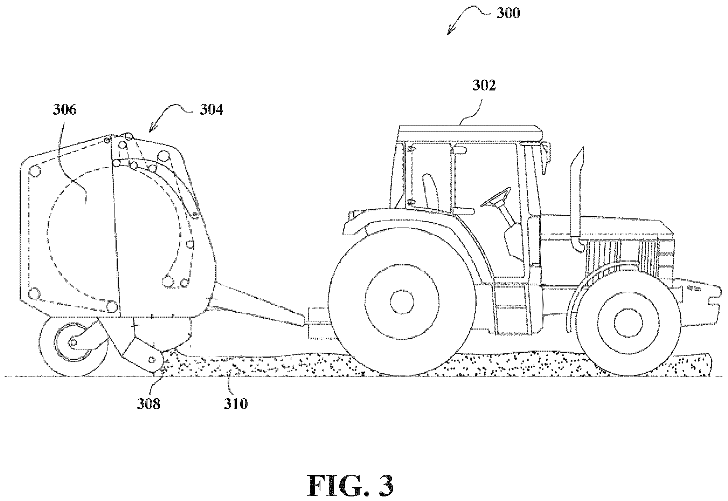

Turning to Fig. 3, illustrated is an exemplary, non-limiting implementation of an agricultural machine 300. The machine 300 may be one exemplary implementation of second agricultural machine 120 described above. Referring to Fig. 3, machine 300 includes a tractor 302 pulling a harvesting implement 304. In other embodiments, however, machine 300 may include a self-propelled implement, including both a traction unit and the harvesting implement 304 combined into a single vehicle.

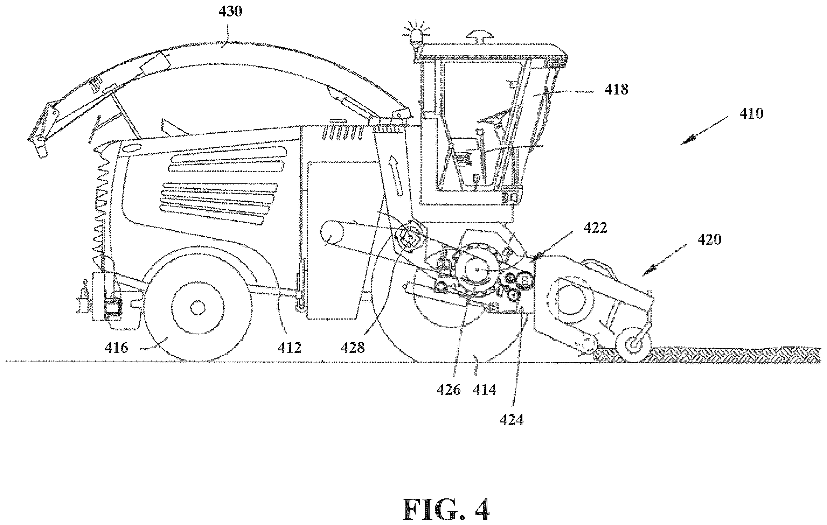

Tractor 302 pulls the harvesting implement 304 through a field to harvest a crop material 310. In the example embodiment described herein, the harvesting implement 304 is embodied and referred to as a baler 304 operable to harvest hay or other similar crop material 310. However, it should be appreciated that the harvesting implement 304 may be configured differently than the example embodiment shown and described herein and used to harvest crop materials 310 other than hay. As such, the teachings of this disclosure are not limited to a baler for baling hay and may be applied to other crop harvesting applications and implements, such as but not limited to a forage harvester (Fig. 4) or a combine.

The example embodiment of the baler 304 described herein may include any type of baler 304, including but not limited to a large square baler, a small square baler, or a round baler. Unless otherwise described herein, the baler 304may operate as known in the art. Generally, referring to Fig. 3, the baler 304 includes a pick-up 308 located at a forward end of the baler 304, which gathers the crop material 310 from the ground. The pick-up 308 feeds the gathered crop material 310 to a baling chamber 306, which forms the crop material 310 into the bale, e.g., either a square bale or a round bale. The specific features and operation of the baler 304 related to gathering and forming the crop material 310 into bales are known to those skilled in the art, are not pertinent to the teachings of this disclosure, and are therefore not describe in greater detail herein.

Fig. 4 shows a harvester 410 in the style of a self-propelled forage harvester in a schematic side view. Harvester 410 may be another exemplary implementation of second agricultural machine 120 described above. The harvester 410 is built on a frame 412, which is supported by driven front wheels 414 and steerable rear wheels 416. The harvester 410 is operated from a driver's cab 418, from which a harvesting attachment 420 in the form of a collector is visible. In one example using the harvesting attachment 420, crop picked up from the ground, for example grass or the like, is delivered by a feed conveyor 422 with pre-press rollers, which are arranged within a feed housing 424 on the front of the forage harvester 410, to a cutterhead 426 arranged below the drivers cab 418 that is provided as a crop processing device, which chops the crop into small pieces and outputs it to a conveyor 428. The crop leaves the harvester 410 to a transport vehicle travelling side-by-side via an ejection spout 430 that is rotatable about a roughly vertical axis and adjustable in inclination. In the following, direction statements such as lateral, bottom and top refer to the forward movement direction V of the harvester 410, which runs to the right in Fig. 4.

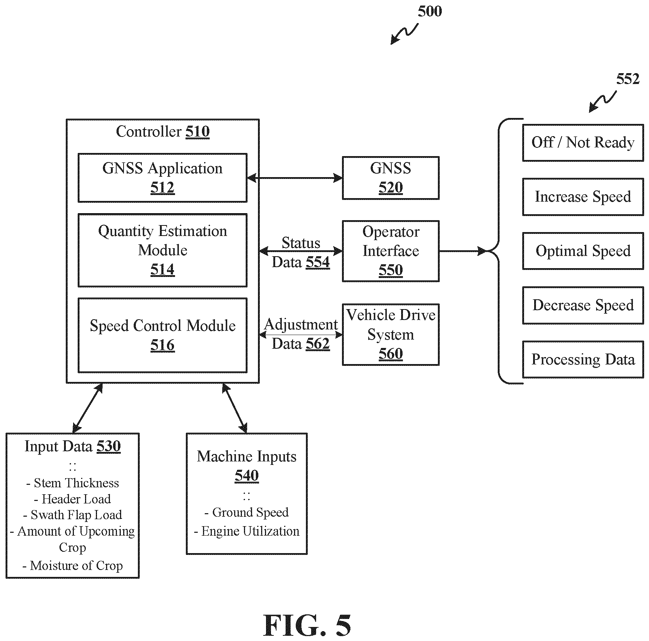

Turning now to Fig. 5, illustrated is a schematic block diagram of a control system 500 according to various aspects. Control system 500 may be implemented by the first agricultural machine 110, machine 200, second agricultural machine 120, machine 300, and/or management system 130. As such, aspects described in connection with control system 500 may be distributed across the machines and systems described above with reference to Figs. 1-3.

As shown in Fig. 5, system 500 includes a controller 510, an operator interface 550, a vehicle drive system 560, and GNSS 520. Operator interface 550 may include various types of different operator interface mechanisms that generate outputs for an operator and allow an operator to provide inputs to control a machine. Controller 510 may include functional modules such as a GNSS application 512, a quantity estimation module 514, and a speed control module 516.

Controller 510 receives input data 530 and machine inputs 540. In an example, input data 530 may be indicative of stem thicknesses, header load, an amount of upcoming crop, and/or a moisture of crop. Machine inputs 540 may include, for example, ground speed and engine utilization.

These inputs may be acquired from a variety of disparate sources. For example, some of input data 530 may be provided by or generated by a first agricultural machine 110, second agricultural machine 120, and/or management system 130 as described above. Further, some of input data 530 may be generated by controller 510 based on other portions of input data 530. For instance, controller 510 may utilize stem thickness, header load, and moisture to determine the amount of crop. The amount of crop, in turn, may be utilized in connection with machine inputs to generate adjustment data 562 or status data 554 as described herein.

According to an aspect, quantity estimation module 514 can determine an estimated quantity of crop processed or harvested by, for example, machine 200 or first agricultural machine 110. Quantity estimation module 514, in an example, can utilize a header load, a swath flap load, or an average of those to determine the estimated quantity of crop. Quantity estimation module 514 can further utilize stem thickness and moisture to adjust for sources of error in the quantity estimation.

GNSS application 512 may acquire location information associated with a location of the crop for which the estimated quantity is determined. For instance, the GNSS application 512 may obtain a location from GNSS 520 where the agricultural machine 110 or machine 200 was positioned when it harvested the crop from which input data 530, utilized by the quantity estimation module 514, was captured.

GNSS application 512 may similarly acquire a position of other machines such as second agricultural machine 120 and/or machine 300. This position may be utilized to determine an amount of upcoming crop (after harvesting by a first machine). The speed control module 516 utilizes the amount of upcoming crop and machine inputs 540 to determine adjustment data 562. Adjustment data 562, as described herein, indicates an adjustment to a speed of a vehicle collecting a crop in a windrow. When a speed is too high or too low for a particular amount of upcoming crop, speed control module 516 generates adjustment data indicative of a decrease or increase in speed. The adjustment data 562 is communicated to vehicle drive system 560 to effectuate the change in speed.

Controller 510 may also generate status data 554 output to an operator via the operator interface 550. Based on status data 554, an indicator 552 may be displayed. In the example depicted in Fig. 5, the indicator 552 may indicate one of off/not ready, increase speed, optimal speed, decrease speed, or processing data.

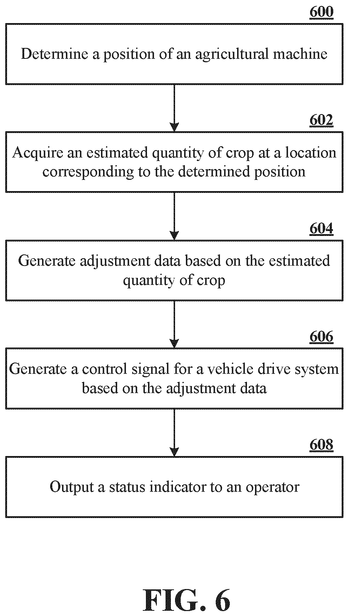

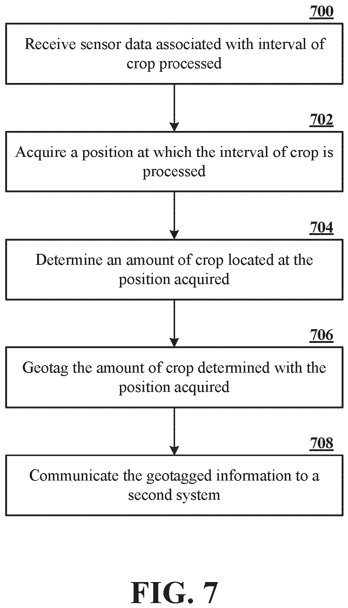

Turning to Figs. 6 and 7, various features and operations of the systems described above are illustrated with exemplary flowcharts. The examples in these figures are illustrative of some features of systems 100 and 500, and machines 200, 300, and 410, but is not exhaustive.

Referring now to Fig. 6, a flowchart of a method for controlling an agricultural machine is illustrated. The method of Fig. 6, in some implementations, may be performed by system 100, second agricultural machine 120, management system 130, control system 500, machine 300,, machine 410, or combinations thereof. The method can begin at reference numeral 600 where a position of an agricultural machine is determined. The agricultural machine may be baler or other similar machine that collects a crop material processed into windrows on a field. At 602, based on the determined position, an estimated quantity of crop is acquired. As described above, geotagged information may be captured during harvesting (i.e. creation of the windrows) (see also Fig. 7). Using the geotagged information, the estimated quantity of crop at a location corresponding to the determined position can be retrieved.

At 604, adjustment data is generated based on the estimated quantity of crop. The adjustment data is indicative of an adjustment to a speed of the agricultural machine. At 606, a control signal is generated. The control signal is based on the adjustment data and is a signal communicated to a vehicle drive system to effectuate a change in speed. At 608, a status indicator may be output to an operator.

Turning to Fig. 7, illustrated is an exemplary method for generating geotagged windrow information is illustrated. The method of Fig. 7, in some implementations, may be performed by system 100, first agricultural machine 110, machine 200, machine 300, machine 410, control system 500, management system 130, or combinations thereof. The method may begin at 700 where sensor data is received. The sensor data is associated with an interval of crop processed by the agricultural machine. For example, the interval may be an interval length of processed crop in a direction of travel of the agricultural machine. At 702, a position of the agricultural machine is acquired. The position acquired at 702 is a position of the interval of crop processed. At 704, an amount of crop located at the position acquired (e.g. for the interval) is determined based on the sensor data. The sensor data may include a header load, stem thickness, moisture, etc. Based on this information, the amount of crop material is estimated. At 706, the amount of crop material determined based on the sensor data is geotagged with the position acquired. At 708, the geotagged information is communicated to a second system such as, for example, another agricultural machine controlled according to Fig. 6

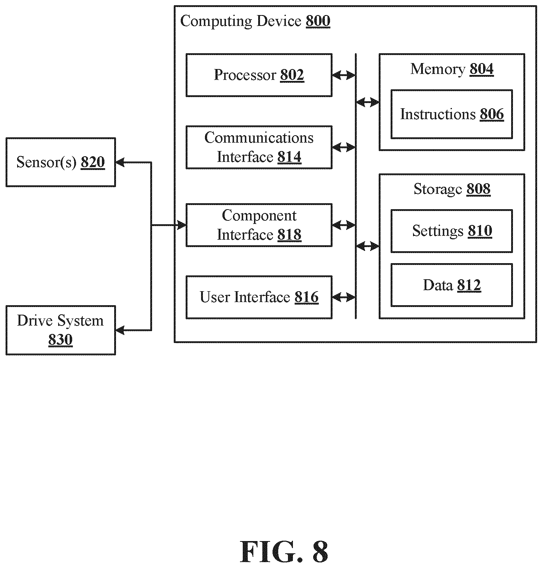

Turning to Fig. 8, illustrated is a schematic block diagram of an exemplary, non-limiting implementation for a computing device 800. Computing device 800 may be utilized to implement system 100, controller 112, controller 122, controller 132, control system 500, or other controller of agricultural machines. Computing device 800 includes a processor 802 configured to execute computer-executable instructions 806 such as instructions composing a control system to capture and utilize geotagged information as described herein. Such computer-executable instructions 806 can be stored on one or more computer-readable media including non-transitory, computer-readable storage media such as memory 804. Memory 804 can also include other data (working data, sensor data, geotagged information, or variables) or portions thereof during execution of instructions 806 by processor 802.

The computing device 800 can also include storage 808 that can be, according to an embodiment, non-volatile storage to persistently store instructions 806, settings 810 (e.g. configuration settings) and/or data 812 (e.g., operational data, sensor data, geotagged information, machine inputs, etc.).

The computing device 800 may also include a user interface 816 that comprises various elements to obtain user input and to convey user output. For instance, user interface 816 can comprise of a touch display, which operates as both an input device and an output device. In addition, user interface 816 can also include various buttons, switches, keys, etc. by which a user can input information to computing device 800; and other displays, LED indicators, etc. by which other information can be output to the user. Further still, user interface 816 can include input devices such as keyboards, pointing devices, and standalone displays.

The computing device 800 further includes a communications interface 814 to couple computing device 800, via the a communications network, to various devices such as, but not limited to, other computing devices 800, agricultural machines, sensors, drive systems, other controllers, servers, sensors, or Internet-enabled devices (e.g., IoT sensors or devices). Communication interface 814 can be a wired or wireless interface including, but not limited, a WiFi interface, an Ethernet interface, a Bluetooth interface, a fiber optic interface, a cellular radio interface, a satellite interface, etc.

A component interface 818 is also provided to couple computing device 800 to various components such as sensors 820, drive system 830, and/or other components of agricultural machines. Component interface 818 can include a plurality of electrical connections on a circuit board or internal bus of computing device 800 that is further coupled to processor 802, memory 804, etc. Component interface 818, in another embodiment, can be an interface for a CAN bus of agricultural vehicle. Further, the component interface 818 can implement various wired or wireless interfaces such as, but not limited to, a USB interface, a serial interface, a WiFi interface, a short-range RF interface (Bluetooth), an infrared interface, a near-field communication (NFC) interface, etc.

According to an aspect, a system for an agricultural machine is provided. The system includes a controller that operably receives input data indicative of location-dependent quantities of crop and a position of the agricultural machine. The controller includes at least one processor and a memory that stores instructions that, when executed by the at least one processor, configure the at least one processor to: acquire an estimated quantity of crop based on the position of the agricultural machine and the location-dependent quantities of crop; and generate adjustment data indicative of an adjustment to a speed of the agricultural machine based on the estimated quantity of crop. The system further includes a drive system that adjusts the speed of the agricultural machine based on the adjustment data.

In an example, the system also includes a communication interface configured to communicatively couple the controller with one or more external systems. The memory further stores instructions that configure the at least one processor to receive the input data indicative of the location-dependent quantities of crop from a remote system. In another example, the location-dependent quantities of crop is a map of an area having a plurality of interval location within the area. The map indicates an associated quantity of crop for each interval location.

In another example, the system includes a positioning module configured to receive positioning signals. The memory further stores instructions that configure the at least one processor to determine the position of the agricultural machine based on the positioning signals. In another example, the input data is further indicative of crop constituents. The memory further includes instructions that configure the at least one processor to generate the adjustment data based on the estimate quantity of crop and the crop constituents. In this example, the crop constituents include at least one of a moisture content or a stem thickness.

In yet another example, the estimated quantity of crop represents an estimate of an absolute quantity of crop. In another example, the estimated quantity of crop represents an estimate of a relative quantity of crop. The relative quantity of crop is relative to a previously acquired estimate. In this example, the adjustment data indicates a relative adjustment to the speed of the agricultural machine.

In another example, the system includes a user interface. The memory further includes instructions that configure the at least one processor to display a status to an operator. In this example, the status is indicative of at least one of the adjustment to the speed of the agricultural machine or an operational state of the system.

In yet another example, the memory further includes instructions that configure the at least one processor to: generate a control signal based on the adjustment data and send the control signal to at least one actuator of the drive system to effectuate a change to the speed of the agricultural machine.

In another aspect, a method for an agricultural machine is provided. The method includes determining a position of the agricultural machine. The method also includes acquiring an estimated quantity of crop at a location corresponding to the position of the agricultural machine. In addition, the method includes generating adjustment data indicative of an adjustment to a speed of the agricultural machine. Further, the method includes generating a control signal for a drive system of the agricultural machine based in part on the adjustment data.

According to an example, the method also includes receiving sensor data from at least one sensor indicative of a quantity of crop processed by a second agricultural machine at a plurality of intervals, receiving position data indicative of a location of the second agricultural machine at each interval of the plurality of intervals, and generating a set of estimated values of the quantity of crop for an area based on the sensor data and the position data. Further to this example, acquiring the estimated quantity of crop includes obtaining the estimated quantity of crop from the set of estimated values corresponding to the position of the agricultural machine.

In another example, the method includes receiving further sensor data from additional sensors. The further sensor data is indicative of a thickness of crop stems and a moisture content of crop processed by the second agricultural machine at the plurality of intervals. The method also includes determining an estimated value of the quantity of crop at each interval based on the sensor data indicative of the quantity of crop processed and the further sensor data indicative of the thickness of crop stems and the moisture content.

In another example, the method includes outputting a status to a user interface of the agricultural machine based on the adjustment data. The status indicates a recommended change to the speed of the agricultural machine. The method also includes receiving a user input via the user interface and generating the control signal for the drive system based on the user input.

According to yet another aspect, a system is provided. The system includes a set of sensors configured to sense a set of attributes related to crop processing by a first agricultural machine at a plurality of intervals throughout an area. The set of sensors includes at least one of a header load sensor configured to sense a load on a header of the first agricultural machine or a swath flap load sensor configured to sense a load on a swath flap of the first agricultural machine. The system also includes a first position sensor configured to determine a position of the first agricultural machine for each interval at which the set of sensors sense the set of attributes. The system further includes a second position sensor configured to determine a position of a second agricultural machine. In addition, the system includes any of one or more processors. Any of the one or more processors are configured to receive sensor data from the set of sensors at the plurality of intervals. The sensor data is indicative of the set of attributes, and the set of attributes include at least a header load of the first agricultural machine at each interval. The one or more processors are further configured to receive first position data from the first position sensor. The first position data is indicative of a location of the first agricultural machine at each interval. In addition, the one or more processors are configured to generate a set of values indicative of an estimated quantity of crop processed by the first agricultural machine for each interval throughout the area based on the sensor data and the first position data. Each value is tagged with a corresponding location in area. The one or more processors are further configured to receive second position data from the second position sensor. The second position data is indicative of a location of the second agricultural machine. The one or more processors are further configured to acquire an estimated quantity of crop corresponding to the location of the second agricultural machine. In addition, the one or more processors are configured to generate adjustment data indicative of an adjustment to a speed of the second agricultural machine based on the estimated quantity of crop.

In an example, the one or more processors are further configured to communicate a control signal to a drive system of the second agricultural machine to effectuate a change to the speed of the second agricultural machine based on the adjustment data. In another example, the one or more processors are further configured to generate an indication of the adjustment to the speed of the second agricultural machine for display on a user interface of the second agricultural machine.

The foregoing description and examples has been set forth merely to illustrate the disclosure and are not intended as being limiting. Each of the disclosed aspects and embodiments of the present disclosure may be considered individually or in combination with other aspects, embodiments, and variations of the disclosure. In addition, unless otherwise specified, none of the steps of the methods of the present disclosure are confined to any particular order of performance. Modifications of the disclosed embodiments incorporating the spirit and substance of the disclosure may occur to persons skilled in the art and such modifications are within the scope of the present disclosure. Furthermore, all references cited herein are incorporated by reference in their entirety.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list.

Overall, the language of the claims is to be interpreted broadly based on the language employed in the claims. The language of the claims is not to be limited to the non-exclusive embodiments and examples that are illustrated and described in this disclosure, or that are discussed during the prosecution of the application.

Although systems and methods for controlling an agricultural machine based on geotagged information have been disclosed in the context of certain embodiments and examples, this disclosure extends beyond the specifically disclosed embodiments to other alternative embodiments and/or uses of the embodiments and certain modifications and equivalents thereof. Various features and aspects of the disclosed embodiments can be combined with or substituted for one another in order to form varying modes of systems and methods for speed adjustment based on geotagged harvesting information. The scope of this disclosure should not be limited by the particular disclosed embodiments described herein.

Certain features that are described in this disclosure in the context of separate implementations can be implemented in combination in a single implementation. Conversely, various features that are described in the context of a single implementation can be implemented in multiple implementations separately or in any suitable sub-combination. Although features may be described herein as acting in certain combinations, one or more features from a claimed combination can, in some cases, be excised from the combination, and the combination may be claimed as any sub-combination or variation of any sub-combination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the spirit and scope of the various embodiments described and the appended claims. Further, the disclosure herein of any particular feature, aspect, method, property, characteristic, quality, attribute, element, or the like in connection with an embodiment can be used in all other embodiments set forth herein. Any methods disclosed herein need not be performed in the order recited. Depending on the embodiment, one or more acts, events, or functions of any of the algorithms, methods, or processes described herein can be performed in a different sequence, can be added, merged, or left out altogether (e.g., not all described acts or events are necessary for the practice of the algorithm). In some embodiments, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each embodiment. Additionally, all possible combinations, sub-combinations, and rearrangements of systems, methods, features, elements, modules, blocks, and so forth are within the scope of this disclosure. The use of sequential, or time-ordered language, such as "then," "next," "after," "subsequently," and the like, unless specifically stated otherwise, or otherwise understood within the context as used, is generally intended to facilitate the flow of the text and is not intended to limit the sequence of operations performed. Thus, some embodiments may be performed using the sequence of operations described herein, while other embodiments may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some embodiments have been described in connection with the accompanying figures. Certain figures are drawn and/or shown to scale, but such scale should not be limiting, since dimensions and proportions other than what are shown are contemplated and are within the scope of the embodiments disclosed herein. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various embodiments can be used in all other embodiments set forth herein. Additionally, any methods described herein may be practiced using any device suitable for performing the recited steps.

The methods disclosed herein may include certain actions taken by a practitioner; however, the methods can also include any third-party instruction of those actions, either expressly or by implication.

In summary, various embodiments and examples of systems and methods for acquiring and utilizing geotagged windrow information have been disclosed. Although the systems and methods for multiplex air cart have been disclosed in the context of those embodiments and examples, this disclosure extends beyond the specifically disclosed embodiments to other alternative embodiments and/or other uses of the embodiments, as well as to certain modifications and equivalents thereof. This disclosure expressly contemplates that various features and aspects of the disclosed embodiments can be combined with, or substituted for, one another. Thus, the scope of this disclosure should not be limited by the particular disclosed embodiments described herein, but should be determined only by a fair reading of the claims that follow.

## Claims

1. A system (100, 500) for an agricultural machine (120), comprising:
a controller (122. 510) that operably receives input data (530) indicative of location-dependent quantities of crop and a position of the agricultural machine, wherein the controller (122, 510) includes:
at least one processor (802); and
a memory (804) that stores instructions that, when executed by the at least one processor, configure the at least one processor to:
acquire an estimated quantity of crop based on the position of the agricultural machine and the location-dependent quantities of crop; and
generate adjustment data indicative of an adjustment to a speed of the agricultural machine based on the estimated quantity of crop; and
a drive system (128, 560, 830) that adjusts the speed of the agricultural machine based on the adjustment data.

2. The system (100, 500) of claim 1, further comprising a communication interface (126) configured to communicatively couple the controller (122, 510) with one or more external systems, wherein the memory further stores instructions that configure the at least one processor to receive the input data indicative of the location-dependent quantities of crop from a remote system (130).

3. The system (100, 500) of claim 1 or 2, wherein the location-dependent quantities of crop comprises a map of an area having a plurality of interval location within the area, the map indicates an associated quantity of crop for each interval location.

4. The system (100, 500) according to at least one of the preceding claims, further comprising a positioning module (124) configured to receive positioning signals, wherein the memory further stores instructions that configure the at least one processor to determine the position of the agricultural machine based on the positioning signals.

5. The system (100, 500) according to at least one of the preceding claims, wherein the input data is further indicative of crop constituents, and wherein the memory further includes instructions that configure the at least one processor to generate the adjustment data based on the estimate quantity of crop and the crop constituents.

6. The system (100, 500) according to at least one of the preceding claims, wherein the crop constituents include at least one of a moisture content or a stem thickness.

7. The system (100, 500) according to at least one of the preceding claims, wherein the estimated quantity of crop represents an estimate of an absolute quantity of crop.

8. The system (100, 500) according to at least one of the preceding claims, wherein the estimated quantity of crop represents an estimate of a relative quantity of crop, wherein the relative quantity of crop is relative to a previously acquired estimate, and wherein the adjustment data indicates a relative adjustment to the speed of the agricultural machine.

9. The system according to at least one of the preceding claims, further comprising a user interface (550), wherein the memory further includes instructions that configure the at least one processor to display a status to an operator, and wherein the status is indicative of at least one of the adjustment to the speed of the agricultural machine or an operational state of the system.

10. The system according to at least one of the preceding claims, wherein the memory further includes instructions that configure the at least one processor to:
generate a control signal based on the adjustment data; and
send the control signal to at least one actuator of the drive system to effectuate a change to the speed of the agricultural machine.

11. A method for an agricultural machine, comprising:
determining (600) a position of the agricultural machine;
acquiring (602) an estimated quantity of crop at a location corresponding to the position of the agricultural machine;
generating (604) adjustment data indicative of an adjustment to a speed of the agricultural machine; and
generating (606) a control signal for a drive system of the agricultural machine based in part on the adjustment data.

12. The method of claim 11, further comprising:
receiving (700) sensor data from at least one sensor indicative of a quantity of crop processed by a second agricultural machine at a plurality of intervals;
receiving (702) position data indicative of a location of the second agricultural machine at each interval of the plurality of intervals; and
generating (704, 706) a set of estimated values of the quantity of crop for an area based on the sensor data and the position data.

13. The method of claim 11 or 12, wherein acquiring the estimated quantity of crop includes obtaining the estimated quantity of crop from the set of estimated values corresponding to the position of the agricultural machine.

14. The method according to at least one of the claims 11 to 13, further comprising:
receiving further sensor data from additional sensors, the further sensor data being indicative of a thickness of crop stems and a moisture content of crop processed by the second agricultural machine at the plurality of intervals; and
determining an estimated value of the quantity of crop at each interval based on the sensor data indicative of the quantity of crop processed and the further sensor data indicative of the thickness of crop stems and the moisture content.

15. The method according to at least one of the claims 11 to 14, further comprising:
outputting (608) a status to a user interface of the agricultural machine based on the adjustment data, wherein the status indicates a recommended change to the speed of the agricultural machine;
receiving a user input via the user interface; and
generating the control signal for the drive system based on the user input.
